(19) Europäisches Patentamt
European Patent Office
Office européen des brevets

(11) **EP 4 206 557 A1**

(12) **EUROPEAN PATENT APPLICATION**

(43) Date of publication:
05.07.2023 Bulletin 2023/27

(21) Application number: 21217903.0

(22) Date of filing: 28.12.2021

(51) International Patent Classification (IPC):
**F24T 10/15** (2018.01)

(52) Cooperative Patent Classification (CPC):
**F24T 10/15**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Muovitech AB**
**50730 Brämhult (SE)**

(72) Inventors:
• **Paulsson, Maria**
**507 30 BRÄMHULT (SE)**
• **Johansson, Kim**
**507 30 BRÄMHULT (SE)**
• **Kalantar, Adib**
**507 30 BRÄMHULT (SE)**
• **Ojala, Kari**
**507 30 BRÄMHULT (SE)**

(74) Representative: **AWA Sweden AB**
**Box 5117**
**200 71 Malmö (SE)**

(54) **COLLECTOR**

(57)     A system for extracting geothermal energy from a well. The system comprises a polymer geothermal collector (1) configured to be placed in the well for enabling circulation of a fluid in the polymer geothermal collector (1), when placed in the well, for performing heat exchange between the fluid in the polymer geothermal collector (1) and the well. The polymer geothermal collector (1) comprising a first portion (1') for transporting the fluid into the well and a second portion (1'') for transporting the fluid out from the well. The first and second portions (1', 1'') of the polymer geothermal collector (1) each have a non-circular cross-section, having a first cross-sectional distance having a first length and a second cross-sectional distance having a second length, in a plane perpendicular to the length extension of the polymer geothermal collector (1), and wherein the second length is at least 1,2 times the first length.

Fig.1

EP 4 206 557 A1

**Description**

TECHNICAL FIELD

The present application relates to collectors for geothermal heat exchange and systems for improving the efficiency of collectors.

BACKGROUND OF THE INVENTION

Geothermal energy is energy stored as heat in the ground. This energy may originate from the hot core of the earth or may be heat generated by the earth surface being exposed to infrared radiation from the sun. Most geothermal installations today use the second category of geothermal energy, i.e., solar energy stored as heat in e.g. water, ground or bedrock.

In a geothermal energy system using circulating fluid, the heat is extracted from the ground (e.g. water or bedrock) using a geothermal pipe collector. In the geothermal collector, the fluid, known as heat transfer medium or heat transfer liquid is circulated such that fluid heated by the geothermal energy is extracted in one end of the geothermal collector, the cooled fluid is then returned in the other end of the geothermal collector such that a closed system is created.

Examples of geothermal energy systems are ground surface heat systems, sea heat systems and borehole heat systems. In ground surface heat systems, a several hundred meters long geothermal collector is buried in the ground at a frost-proof depth. In a sea heat system, a similar pipe collector is placed in the sea water and/or on/in the seabed.

In a borehole heat system, a geothermal collector having two fluid conduits are placed in the bore hole, such that the fluid pumped into the borehole though a first of the two fluid conduits and out from the borehole through a second of the two fluid conduits. In many applications, polymer pipe collectors are used. However, polymer material are generally relatively good thermal insulators, i.e., have relatively low thermal conductivity in comparison with for example metals. This is a drawback when polymer materials are used in heat exchange applications. For the purpose of decreasing the thermal resistance in the pipe collector, the wall thickness of the pipe collector may be decreased. However, decreasing the wall thickness affects the mechanical properties of the collector, which may be a disadvantage for fulfilling the requirements of collector standards and for the handling of the collector.

SUMMARY OF THE INVENTION

In view of the above-mentioned and other drawbacks of the prior art, the object of the present inventive concept is to provide a geothermal system that has an improved energy efficiency.

According to a first aspect of the invention above and other objectives are at least partly achieved by a system for extracting geothermal energy from a well comprises a polymer geothermal collector configured to be placed in the well for enabling circulation of a fluid in the polymer geothermal collector, when placed in the well, for performing heat exchange between the fluid in the polymer geothermal collector and the well. The polymer geothermal collector comprises a first portion for transporting the fluid into the well and a second portion for transporting the fluid out from the well. The first and second portions of the polymer geothermal collector each have a non-circular cross-section, having a first cross-sectional distance having a first length and a second cross-sectional distance having a second length, in a plane perpendicular to the length extension of the polymer geothermal collector. The second length is at least 1,2 times the first length. A wall of each of the first and second portions of the polymer geothermal collector has a wall thickness in the interval 0,02 - 0,06 times the sum of the first and second lengths. The outer surfaces of the non-circular cross-sections of the first and second portions of the polymer geothermal collector can be placed touching each other and simultaneously touching a circular footprint. The combined cross-sectional area of the first and second portions of the geothermal collector is at least 0,6 times the area of the circular footprint, when the non-circular cross-sections of the first and second portions of the polymer geothermal collector are placed touching each other and simultaneously touching the circular footprint.

The system further comprises the fluid for circulation in the geothermal collector, the fluid has a relative density of above 1,10 for supporting the wall of the first and second portions of the polymer geothermal collector, when the polymer geothermal collector has been installed in the well.

Having a relatively dense fluid supporting the collector from the inside thereof makes it possible to have a non-circular collector with an increased flow area while maintaining the mechanical strength required in deep bore holes.

According to one embodiment, the second length is at least 1,3 times the first length.

According to one embodiment, the second length is at least 1,4 times the first length.

According to one embodiment, the second length is at least 1,5 times the first length.

According to one embodiment, the second length is at least 1,6 times the first length.

According to one embodiment, the second length is at least 1,7 times the first length.

According to one embodiment, the wall of each of the first and second portions of the polymer geothermal collector has a wall thickness in the interval 0,025 - 0,055 times the sum of the first and second lengths.

According to one embodiment, the combined cross-sectional area of the first and second portions of the polymer geothermal collector is at least 0,7 times the area of the circular footprint.

According to one embodiment, the first cross-sectional distance has a length being in the interval 0,9 - 1 times the length of the radius of the circular footprint, such that a relatively good connection between the outer surface of the collector and the inner surface of the bore hole can be established.

According to one embodiment, the fluid has a relative density of above 1,15 for supporting the wall of the first and second portions of the polymer geothermal collector when the polymer geothermal collector has been installed in the well.

According to one embodiment, the fluid has a relative density of above 1,20 for supporting the wall of the first and second portions of the polymer geothermal collector when the polymer geothermal collector has been installed in the well.

According to one embodiment, the outer surfaces of the non-circular cross-sections of the first and second portions of the polymer geothermal collector, each can be placed touching each other and simultaneously touching the circular footprint in a first and second position, interspaced by a position in which each of the outer surfaces of the cross-sections of the first and second portion of the polymer geothermal collector does not touch the circular footprint.

According to one embodiment, the non-circular cross-sections of the first and second portions of the polymer geothermal collector are elliptical.

According to one embodiment, the polymer geothermal collector has a total length of more than 800m, such that the polymer geothermal collector is adapted for a well having a depth of more than 400m.

According to one embodiment, the polymer geothermal collector has a total length of more than 1000m, such that the polymer geothermal collector is adapted for a well having a depth of more than 500m.

In one embodiment the geothermal pipe is used for storing heat in a surrounding ground on the outside of the outer pipe and/or for retrieving stored heat from a surrounding ground on the outside of the outer pipe.

The advantages of the uses as defined above are largely analogous to the advantages of the geothermal pipes and collector as described above. That is, the increased efficiency in thermal properties and increased mechanical strength of the pipes.

Further features of, and advantages with, the present invention will become apparent when studying the appended claims and the following description. The skilled addressee realize that different features of the present invention may be combined to create embodiments other than those described in the following, without departing from the scope of the present invention.

BRIEF DESCRIPTION OF THE DRAWINGS

The various aspects of the invention, including its particular features and advantages, will be readily understood from the following detailed description and the accompanying drawings, in which:

Fig. 1 shows a system for extracting geothermal energy from a well, in which a polymer geothermal collector for extracting geothermal energy from the well is used, in a cross-sectional view.
Fig. 2 shows a cross-sectional view of the well and the polymer geothermal collector, showing the first and second portions of the polymer geothermal collector, each have a non-circular cross-section.
Fig. 3 shows a schematic, graph-like, cross-sectional view of a circular footprint as well as the elliptical cross-sections of the first and second portions of the polymer geothermal collector.

DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout.

Moreover, in general only sections of the pipe lengths are illustrated in the figures. The lengths are obviously longer in reality but in order to illustrate the technical features of the dimensions only a section of the pipe lengths is illustrated.

Geothermal energy is typically energy stored in the ground as the ground is heated by the sun during the warm parts of the year and then cools slowly during the cooler part of the year. It may however, in specific places also be volcanic heat usurping form the hot core of the earth.

Lately, there has been an increased interest in drilling deeper wells. It may be so that the rock providing good energy storage and/or conductivity is located at larger depths with e.g. a thick layer of sand above. It may also be so that the absence of space makes it important to reduce the number of holes drilled for extracting a specific amount of heat.

When making deep wells or boreholes (the terms will be used as analogues as a drilled borehole forms an energy well when being equipped with a geothermal collector), the pressure-drop in the pipe increases which means that a pump needs to work harder to circulate the fluid. This means that the pump consumes more energy, which lowers the efficiency of the heat pump system.

As heated (or cooled) fluid is to be transported out from the well, whereas cooler (or warmer) fluid is to be transported into the well, it is a disadvantage when the fluids in the different portions of the collector are affected by each other i.e. such that the heated fluid is cooled by the proximity to the cooler fluid in the bore hole. One way to avoid this thermic contamination is to increase the speed of the flowing fluid, such that the fluids of different temperatures spend less time in proximity of each other. However, the increased flow rate further increases the pressure drop.

Increasing the cross-sectional area of the collector offsets the increasing pressure drop, as the contact area between the fluid and the inner wall of the collector, relative to the volume of fluid transported, is reduced. However, to be able to fit larger collectors with a circular cross-section in a borehole having a circular cross-section, the diameter of the borehole needs to be increased.

Drilling a borehole having a larger diameter is more expensive and takes longer time.

It is therefore advantageous to use a geothermal collector having a non-circular cross-section, i.e. having a first cross-sectional distance having a first length and a second cross-sectional distance having a second longer length, in a plane perpendicular to the length extension of the geothermal collector.

The disadvantage with non-circular geothermal collectors is that the less optimal shape makes them mechanically weaker. This could be offset by increasing the wall thickness, but an increase in wall thickness increases the insulating effect of the polymer material which reduces the heat transfer capabilities of the geothermal collector making the system less effective.

As such, geothermal collectors having a non-circular cross-section are generally unsuitable for deep boreholes as the external forces acting on the geothermal collector increases with the depth.

The present invention however offers a solution to the above stated problem. By using a fluid for circulation in the geothermal collector having a relative density of above 1.10, a geothermal pipe collector having a non-circular cross-section may be used also in deep boreholes. The dense fluid supports the geothermal pipe collector from within and enables the use of a non-circular pipe collector in deep boreholes without need to increase the wall thickness.

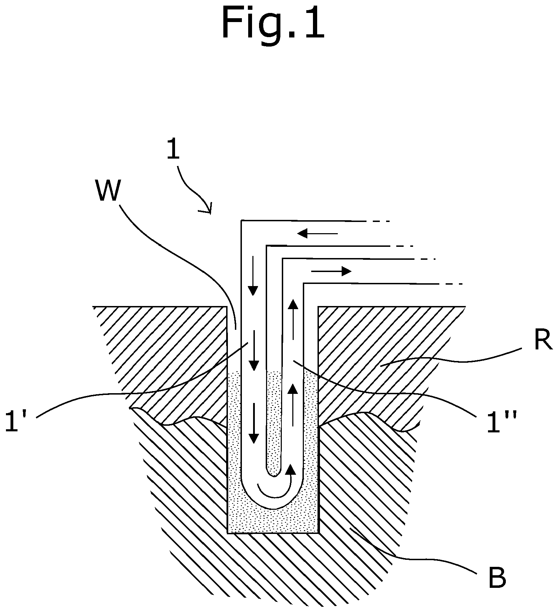

Fig. 1 shows a system for extracting geothermal energy from a well **W,** in which a polymer geothermal collector 1 for extracting geothermal energy from the well **W** is used. In fig. 1, the polymer geothermal collector 1 is placed in the well **W** or borehole for enabling circulation of a fluid in the polymer geothermal collector 1, for performing heat exchange between the fluid in the collector and the bedrock B. The geothermal collector (1) comprises a first portion (1') for transporting the fluid into the well **W** and a second portion (1") for transporting fluid out from the well **W.** To get a good heat exchange with the ground, and thereby extract a lot of energy, it is important that the polymer geothermal collector 1 is placed in connection with a material of the ground having relatively high density and thereby storing a lot of energy per unit of volume. The sought-after material in the ground is usually the bedrock. Bedrock **B** is a solid rock. Sometimes, the bedrock **B** is exposed, but in most cases the bedrock lies under looser surface material. The looser surface material is known as regolith **R** and may be composed of broken and weathered rock material, such as soil or subsoil. To reach the bedrock **B** it may be necessary to drill through a relatively deep layer of regolith **R** which may mean that the well **W** or borehole needs to be made deep for the polymer geothermal collector 1 to be placed in connection with the bedrock **B** over a sufficiently long distance to get a sufficient heat exchange.

In fig. 1, the well has a depth of more than 400m, and as such the polymer geothermal collector 1 has a total length of more than 800m, in particular the well has a depth of more than 500m, and as such the polymer geothermal collector 1 has a total length of more than 1000m.

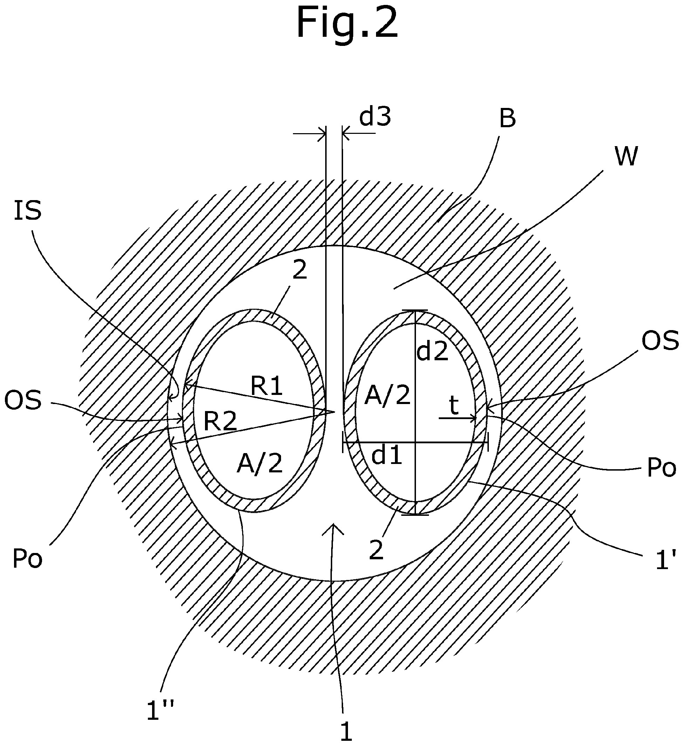

Fig. 2 shows a cross-sectional view of the well **W** and the polymer geothermal collector 1, showing the first and second portions 1',1" of the polymer geothermal collector 1. Each of the first and second portions 1',1" have a non-circular cross-section, having a first cross-sectional distance d1 having a first length and a second cross-sectional distance d2 having a second length, in a plane perpendicular to the length extension of the polymer geothermal collector 1. In the embodiment shown in fig. 2 the second length is more than 1,2 times the first length, and more than 1,3 times the first length, in particular about 1,4 times the first length.

The wall 2 of each of the first and second portions 1',1" of the polymer geothermal collector 1 has a wall thickness t in the interval 0,02 - 0,06 times the sum of the first and second lengths, and in the interval 0,025 - 0,055 times the sum of the first and second lengths.

In fig. 2, the portions of the outer surfaces **OS** facing the inner surface **IS** of the borehole of the non-circular cross-sections of the first and second portions 1',1" are curved with a curvature having substantially the same radius R1 as the radius R2 of the curvature of the inner surface **IS** of the borehole at the central point p0, such that a relatively long contacting surface can be created between the outer surfaces **OS** of the first and second portions \1',1" of the polymer geothermal collector 1, and the inner surface **IS** of the borehole, which increases the heat transfer between the borehole the polymer geothermal collector. The radius R1 is preferably in the interval 0,9 - 1,1 times the radius R2.

In fig. 2, the first and second portions 1',1" of the polymer geothermal collector 1 are placed with a distance d3 from each other. Having a distance insulates the first portion 1' of the polymer geothermal collector 1 from the second portion 1" of the polymer geothermal collector 1, which decreases the cooling effect that the cooler fluid transported into the well though the first portion 1' of the polymer geothermal collector 1 will have on the warmer fluid transported out from the well through the second portion 1" of the polymer geothermal collector 1. The distance may be more than the thickness t of the wall 2 of the polymer geothermal collector 1, or may be more than two times the thickness t of the wall 2 of the polymer geothermal collector 1, or may be in the interval 1-3 times the thickness t of the wall 2 of the polymer geothermal collector 1. The insulating effect of the distance d3 must be weighed against the space such distance takes in the borehole, which reduces the available space for the cross-sectional area of the first and second portions 1',1" of the polymer geothermal collector 1, or creates the need to increase the diameter of the bore hole which is more resource demanding.

In fig. 2 the combined cross-sectional area **A** of the first and second portions 1',1" (each having an area of A/2) of the geothermal collector 1 is more than 0,5 and more than 0,55 times the cross-sectional area of the borehole, even if there is a distance d3 between the first and second portions 1',1", and small distances between the outer surfaces **OS** of the first and second portions 1',1" of the polymer geothermal collector 1, and the inner surface **IS** of the borehole, for enabling the installation of the geothermal collector 1 in the borehole. After installation however, the geothermal collector 1 is free to move in the borehole, causing the geothermal collector 1 to be placed in connection with the inner surface **IS** of the borehole at portions, which increases the heat transfer between the inner surface **IS** of the borehole and the geothermal collector 1.

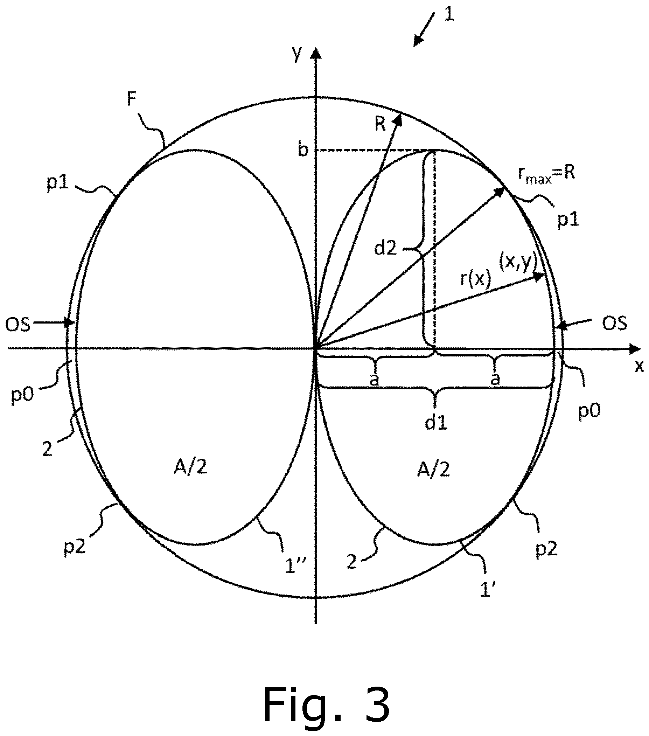

In the embodiment shown in fig. 3, the non-circular cross-sections of the first and second portions 1',1" of the polymer geothermal collector 1 are elliptical.

Fig. 3 shows another embodiment of the polymer geothermal collector 1 comprising a first portion 1' for transporting the fluid into the well and a second portion 1" for transporting the fluid out from the well. In the embodiment of fig. 3, the first and second portions 1',1" of the polymer geothermal collector 1 each have a non-circular cross-section, having a first cross-sectional distance d1 having a first length and a second cross-sectional distance d2 having a second length, in a plane perpendicular to the length extension of the polymer geothermal collector 1. In the embodiment shown in fig. 3 the second length is more than 1,2 times the first length, and more than 1,3 times the first length, and more than 1,4 times the first length, and more than 1,5 times the first length, and more than 1,6 times the first length, and more than 1,7 times the first length, and in particular about 1,74 times the first length.

The wall 2 of each of the first and second portions 1',1" of the polymer geothermal collector 1 has a wall thickness **t** in the interval 0,02 - 0,06 times the sum of the first and second lengths, and in the interval 0,025 - 0,055 times the sum of the first and second lengths.

In the embodiment shown in fig. 3, the outer surfaces **OS** of the non-circular cross-sections of the first and second portions 1',1" of the polymer geothermal collector 1 are be placed touching each other and simultaneously touching a circular footprint **F**. The combined cross-sectional area **A** (the area of each of the first and second portions 1',1" of the polymer geothermal collector being A/2) of the first and second portions 1',1" of the geothermal collector 1 is more than 0,6 times the area of the circular footprint **F,** and more than 0,7 times the area of the circular footprint **F,** and in particular about 0,77 times the area of the circular footprint **F** when the non-circular cross-sections of the first and second portions 1',1" of the polymer geothermal collector 1 are placed touching each other and simultaneously touching the circular footprint **F.**

In the embodiment shown in fig. 3, the polymer geothermal collector 1 is configured to be used with a fluid for circulation in the geothermal collector having a relative density of above 1,10, and preferably above 1,15, and preferably above 1,20, for supporting the wall 2 of the first and second portions 1',1" of the polymer geothermal collector 1, when the polymer geothermal collector 1 has been installed in the well. The fluid for circulation in the geothermal collector preferably have a relative density in the interval 1,1-1,3. The fluid for circulation in the geothermal collector could for example be the fluid Kilfrost GEO, diluted with water in concentrations in the range 24% - 60%, available from Kilfrost Limited, Albion Works, Haltwhistle, Northumberland NE49 OHJ, UK.

In the embodiment shown in fig. 3, the outer surfaces **OS** of the non-circular cross-sections of the first and second portions 1',1" of the polymer geothermal collector 1 are each placed touching each other and simultaneously touching the circular footprint **F** in a first and second position p1,p2, interspaced by a position p0 in which each of the outer surfaces **OS** of the cross-sections of the first and second portions 1',1" of the polymer geothermal collector 1 does not touch the circular footprint **F.**

Having the outer surfaces **OS** of the first and second portions 1',1" being curved with a curvature having a radius exceeding the radius R of the circular footprint **F,** such that the first and second portions 1',1" touches each other and simultaneously touches the circular footprint **F** in a first and second position p1,p2, interspaced by a position p0 in which each of the outer surfaces **OS** of the cross-sections of the first and second portions 1',1" of the polymer geothermal collector 1 does not touch the circular footprint **F**, creates two points of contact (p1,p2) between each of the first and second portions 1',1" of the polymer geothermal collector 1 and the circular footprint **F,** and potentially between the first and second portions 1',1" of the polymer geothermal collector 1 and the inner surface of the borehole. Increasing the number of contact points between the polymer geothermal collector and the borehole increases the heat transfer between the borehole and the polymer geothermal collector 1, thus creating a more efficient system.

In the embodiment shown in fig. 3, the non-circular cross-sections of the first and second portions 1',1" of the polymer geothermal collector 1 are elliptical.

To be able to transport as much fluid as possible in a borehole at a specific flowrate, the inner cross-sectional area of the of the first and second portions 1',1" of the polymer geothermal collector 1 should be made as large as possible. In the present invention, this means that two pipes having an as large cross-sectional area as possible should be used in the circular borehole. For the sake of mechanical properties and ease of manufacturing, an elliptically shaped cross-section is suitable. For the purpose of optimizing the shape of such elliptically shaped cross-sections the following steps should be taken.

Fig. 3 further shows an x-axis and a y-axis, with the circular foot print **F** centered around the origin, i.e. (x,y)=(0,0) in fig. 3. The circular footprint **F** has a radius of **R**. Inside the circular footprint **F** the first or second portion, 1', 1" are arranged, each having an elliptical cross-section, i.e. being an ellipsis. The ellipsis (1',

1") is centered around x=a, i.e. (x,y)=(a,0). For the purpose of optimizing the fluid flow, it is of interest to identify the biggest ellipsis which may fit inside one half of the circular footprint, and correspondingly the biggest two equally sized ellipses that would fit inside the circular footprint.

The ellipsis 1', 1" is defined by the below ellipses equation:

$$\left(\frac{x-a}{a}\right)^2 + \left(\frac{y}{b}\right)^2 = 1$$

Thus, $y^2$ can be formulated as follows:

$$y^2 = b^2\left(1 - \frac{(x-a)^2}{a^2}\right) = \frac{b^2}{a^2}(a^2 - x^2 + 2ax - a^2) = \frac{b^2}{a^2}(2ax - x^2)$$

Further, the length of the vector r can, with the help of Pythagoras' theorem and the above formulation of $y^2$, be formulated as:

$$r^2(x) = x^2 + y^2 = x^2 + \frac{b^2}{a^2}(2ax - x^2) = \frac{2b^2}{a}x - \left(\frac{b^2}{a^2} - 1\right)x^2 \rightarrow$$

$$r(x) = \sqrt{\frac{2b^2}{a}x - \left(\frac{b^2}{a^2} - 1\right)x^2}$$

The largest possible ellipsis that can fit inside the circle will tangent the circumference of the circle **F**. Further, the point where the ellipsis will tangent the circle is where the vector **r** is at a maximum. Thus, by deriving the function of r(x), and then setting r'(x)=0, the following is obtained:

$$r'(x) = \frac{1}{2}\left(\frac{2b^2}{a}x - \left(\frac{b^2}{a^2} - 1\right)x^2\right)^{-\frac{1}{2}} \cdot \left(\frac{2b^2}{a} - 2\left(\frac{b^2}{a^2} - 1\right)x\right)$$

$$r'(x) = 0 \rightarrow \left( \frac{2b^2}{a} - 2\left( \frac{b^2}{a^2} - 1 \right)x \right) = 0 \rightarrow x = \frac{b^2}{a\left( \frac{b^2}{a^2} - 1 \right)}$$

Thereby, a formula for **x**, which is dependent on a and b, which maximizes the length of the vector r is obtained. When the above formula for x is put into the equation for the vector r, the below is obtained for $r_{max}$. Further, as the maximally sized ellipsis tangents the circle F, $r_{max}$ is also equal to the radius R of the circle F:

$$r_{max} = \sqrt{\frac{2b^2}{a}\left( \frac{b^2}{a\left( \frac{b^2}{a^2}-1 \right)} \right) - \left( \frac{b^2}{a^2} - 1 \right)\left( \frac{b^2}{a\left( \frac{b^2}{a^2}-1 \right)} \right)^2} = \sqrt{\frac{2b^4}{a^2\left( \frac{b^2}{a^2}-1 \right)} - \frac{b^4}{a^2\left( \frac{b^2}{a^2}-1 \right)}} = \sqrt{\frac{b^4}{a^2\left( \frac{b^2}{a^2}-1 \right)}} = $$

$$\sqrt{\frac{b^4}{b^2\left( 1-\left( \frac{a}{b} \right)^2 \right)}} = b\sqrt{\frac{1}{1-\left( \frac{a}{b} \right)^2}} = R$$

Thus, a relationship between R, a and b is obtained, for the maximally sized ellipsis, which can be formulated accordingly:

$$R^2 = \frac{b^2}{1 - \left( \frac{a}{b} \right)^2} \rightarrow b^2 - R^2\left( 1 - \left( \frac{a^2}{b^2} \right) \right) = 0 \rightarrow b^4 - R^2 b^2 + R^2 a^2 = 0 \rightarrow$$

$$b^2 = \frac{R^2}{2} \pm \sqrt{\left( \frac{R^2}{2} \right)^2 - R^2 a^2} = \frac{R^2}{2} \pm \frac{R^2}{2}\sqrt{1 - \frac{4}{R^4}R^2 a^2} \rightarrow$$

$$b = R\sqrt{\frac{1}{2} + \frac{1}{2}\sqrt{1 - \left( \frac{2a}{R} \right)^2}}$$

The area A of the ellipsis is thereby:

$$A = ab\pi = R\pi a\sqrt{\frac{1}{2} + \frac{1}{2}\sqrt{1 - \left( \frac{2a}{R} \right)^2}} = A(a)$$

By deriving the function A(a) (not shown here) and setting the value of A'(a)=0, the value of a that maximizes the area of the ellipsis is obtained. Once the value of **a** is obtained the corresponding value of **b** can be obtained. The resulting relationship between **a, b** and **R** for the maximally sized ellipsis is as follows; **a**=0.47R and **b**=0.82R. Thereby, the area of two such ellipses are equal to 0,77 of the area of the circular footprint **F**.

Please note that the detailed description should be interpreted in its broadest outline and that any embodiment or part of embodiment could be combined in any way. All examples herein should be seen as part of the general description and therefore possible to combine in any way in general terms.

**Claims**

1.  A system for extracting geothermal energy from a well, the system comprises a polymer geothermal collector (1) configured to be placed in the well for enabling circulation of a fluid in the polymer geothermal collector (1), when placed in the well, for performing heat exchange between the fluid in the polymer geothermal collector (1) and the well, the polymer geothermal collector (1) comprising a first portion (1') for transporting the fluid into the well and a second portion (1") for transporting the fluid out from the well, wherein:

    the first and second portions (1',1") of the polymer geothermal collector (1) each have a non-circular cross-section, having a first cross-sectional distance (d1) having a first length and a second cross-sectional distance (d2) having a second length, in a plane perpendicular to the length extension of the polymer geothermal collector (1), and wherein the second length is at least 1,2 times the first length,
    a wall (2) of each of the first and second portions (1',1") of the polymer geothermal collector (1) has a wall thickness (t) in the interval 0,02 - 0,06 times the sum of the first and second lengths, and wherein
    outer surfaces (OS) of the non-circular cross-sections of the first and second portions (1',1") of the polymer geothermal collector (1) can be placed touching each other and simultaneously touching a circular footprint (F), and wherein the combined cross-sectional area (A) of the first and second portions (1',1") of the geothermal collector (1) is at least 0,6 times the area of the circular footprint (F), when the non-circular cross-sections of the first and second portions (1',1") of the polymer geothermal collector (1) are placed touching each other and simultaneously touching the circular footprint (F), and wherein
    the system further comprises the fluid for circulation in the geothermal collector (1), wherein the fluid has a relative density of above 1,10 for supporting the wall (2) of the first and second portions (1',1") of the polymer geothermal collector (1), when the polymer geothermal collector (1) has been installed in the well.

2.  The system according to claim 1, wherein the second length is at least 1,3 times the first length or at least 1,4 times the first length.

3.  The system according to any one of claims 1 and 2, wherein the wall (2) of each of the first and second portions (1',1") of the polymer geothermal collector (1) has a wall thickness (t) in the interval 0,025 - 0,055 times the sum of the first and second lengths.

4.  The system according to any one of claims 1-3, wherein the combined cross-sectional area (A) of the first and second portions (1',1") of the polymer geothermal collector (1) is at least 0,7 times the area of the circular footprint (F).

5.  The system according to any one of claims 1-4, wherein the fluid has a relative density of above 1,15 for supporting the wall (2) of the first and second portions (1',1") of the polymer geothermal collector (1) when the polymer geothermal collector (1) has been installed in the well.

6.  The system according to any one of claims 1-5, wherein the first cross-sectional distance (d1) has a length being in the interval 0,9 - 1 times the length of the radius (R) of the circular footprint (F).

7.  The system according to any one of claims 1 - 6, wherein the outer surfaces (OS) of the non-circular cross-sections of the first and second portions (1',1") of the polymer geothermal collector (1), each can be placed touching each other and simultaneously touching the circular footprint (F) in a first and second position (p1,p2), interspaced by a position (p0) in which each of the outer surfaces (OS) of the cross-sections of the first and second portion (1',1") of the polymer geothermal collector (1) does not touch the circular footprint (F).

8.  The system according to any one of claims 1 - 7, wherein the non-circular cross-sections of the first and second portions (1',1") of the polymer geothermal collector (1) are elliptical.

9.  A polymer geothermal collector (1) for extracting geothermal energy from a well, the polymer geothermal collector (1) being configured to be placed in the well for enabling circulation of a fluid in the polymer geothermal collector (1), when placed in the well, for performing heat exchange between the fluid in the polymer geothermal collector (1) and the well, the geothermal collector (1) comprising a first portion (1') for transporting the fluid into the well and a second portion (1") for transporting the fluid out from the well, wherein:

    the polymer geothermal collector (1) has a total length of more than 800m, such that the polymer geothermal collector (1) is adapted for a well having a depth of more than 400m,

the first and second portions (1',1") of the polymer geothermal collector (1) each have a non-circular cross-section, having a first cross-sectional distance (d1) having a first length and a second cross-sectional distance (d2) having a second length, in a plane perpendicular to the length extension of the polymer geothermal collector (1), and wherein the second length is at least 1,2 times the first length,

a wall (2) of each of the first and second portions (1',1") of the polymer geothermal collector (1) has a wall thickness (t) in the interval 0,02 - 0,06 times the sum of the first and second lengths, and being configured to be supported by the fluid for circulation in the polymer geothermal collector (1), wherein the fluid has a relative density of above 1,10 for supporting the wall (2) of the first and second portions (1',1") of the polymer geothermal collector (1), when the polymer geothermal collector (1) has been installed in the well, and wherein

outer surfaces (OS) of the non-circular cross-sections of the first and second portions (1',1") of the polymer geothermal collector (1) can be placed touching each other and simultaneously touching a circular footprint (F), and wherein the combined cross-sectional area (A) of the first and second portions (1',1") of the geothermal collector (1) is at least 0,6 times the area of the circular footprint (F), when the non-circular cross-sections of the first and second portions (1',1") of the polymer geothermal collector (1) are placed touching each other and simultaneously touching the circular footprint (F).

10. The polymer geothermal collector (1) according to claim 9, wherein the second length is at least 1,3 times the first length or at least 1,4 times the first length.

11. The polymer geothermal collector (1) according to any one of claims 9 - 10, wherein the wall (2) of each of the first and second portions (1',1") of the polymer geothermal collector (1) has a wall thickness (t) in the interval 0,025 - 0,055 times the sum of the first and second lengths.

12. The polymer geothermal collector (1) according to any one of claims 9 - 11, wherein the combined cross-sectional area (A) of the first and second portions (1',1") of the polymer geothermal collector (1) is at least 0,7 times the area of the circular footprint (F).

13. The polymer geothermal collector (1) according to any one of claims 9 - 12, wherein the outer surfaces (OS) of the non-circular cross-sections of the first and second portions (1',1") of the polymer geothermal collector (1) each can be placed touching each other and simultaneously touching the circular footprint (F) in a first and second position (p1,p2), interspaced by a position (p0) in which each of the outer surfaces (OS) of the cross-sections of the first and second portion (1',1") of the polymer geothermal collector (1) does not touch the circular footprint (F).

14. The polymer geothermal collector (1) according to any one of claims 9 - 13, wherein the first cross-sectional distance (d1) has a length being in the interval 0,9 - 1 times the length of the radius (R) of the circular footprint (F).

15. The polymer geothermal collector (1) according to any one of claims 9 - 14, wherein the polymer geothermal collector (1) has a total length of more than 1000m, such that the polymer geothermal collector (1) is adapted for a well having a depth of more than 500m.

# Fig.1

# Fig.2

Fig. 3

Europäisches
Patentamt

European
Patent Office

Office européen
des brevets

# EUROPEAN SEARCH REPORT

**Application Number**

EP 21 21 7903

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DE 10 2007 024561 A1 (TRACTO TECHNIK [DE]) 27 November 2008 (2008-11-27) * figure 3 * * paragraph [0002] * * paragraph [0013] * ----- | 1-15 | INV. F24T10/15 |
| Y | US 2009/025902 A1 (FAVIER GEORGES [FR] ET AL) 29 January 2009 (2009-01-29) * figure 6 * * paragraph [0065] * ----- | 1-15 | |
| A | US 2011/232795 A1 (HARDIN JAMES [US]) 29 September 2011 (2011-09-29) * figures * ----- | 1-15 | |
| A | US 2013/112368 A1 (KOENIG ALBERT A [US]) 9 May 2013 (2013-05-09) * figures * ----- | 1-15 | |
| A | EP 3 026 367 A2 (GEOINTECH S R L [IT]; ITUBE S R L [IT]) 1 June 2016 (2016-06-01) * figures * ----- | 1-15 | **TECHNICAL FIELDS SEARCHED (IPC)** F24T |

The present search report has been drawn up for all claims

| Place of search | Date of completion of the search | Examiner |
|---|---|---|
| The Hague | 18 May 2022 | Fernandez Ambres, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 21 7903

This annex lists the patent family members relating to the patent documents cited in the above-mentioned European search report.
The members are as contained in the European Patent Office EDP file on
The European Patent Office is in no way liable for these particulars which are merely given for the purpose of information.

18-05-2022

| Patent document cited in search report | Publication date | Patent family member(s) | | Publication date |
|---|---|---|---|---|
| DE 102007024561 A1 | 27-11-2008 | NONE | | |
| US 2009025902 A1 | 29-01-2009 | BR | PI0610505 A2 | 10-01-2012 |
| | | CA | 2604260 A1 | 26-10-2006 |
| | | CN | 1854641 A | 01-11-2006 |
| | | EP | 1872067 A1 | 02-01-2008 |
| | | FR | 2884905 A1 | 27-10-2006 |
| | | US | 2009025902 A1 | 29-01-2009 |
| | | WO | 2006111655 A1 | 26-10-2006 |
| US 2011232795 A1 | 29-09-2011 | CA | 2794320 A1 | 29-09-2011 |
| | | US | 2011232795 A1 | 29-09-2011 |
| | | WO | 2011120022 A1 | 29-09-2011 |
| US 2013112368 A1 | 09-05-2013 | NONE | | |
| EP 3026367 A2 | 01-06-2016 | EP | 3026367 A2 | 01-06-2016 |
| | | IT | BO20140111 U1 | 20-05-2016 |

For more details about this annex : see Official Journal of the European Patent Office, No. 12/82